# EUROPÄISCHE PATENTSCHRIFT

(11) **EP 4 585 818 B1**
(45) Veröffentlichungstag und Bekanntmachung des Hinweises auf die Patenterteilung: **05.08.2026**
(21) Anmeldenummer: 24223604.0
(22) Anmeldetag: 30.12.2024
(51) Int. Cl.: F16C 29/00, F16C 29/02, F16C 29/06, F16H 25/20, F16H 25/24

(54) **LINEARES FÜHRUNGSSYSTEM**
LINEAR GUIDANCE SYSTEM
SYSTÈME DE GUIDAGE LINÉAIRE

(30) Priorität: 12.01.2024 DE 102024100913
(43) Veröffentlichungstag der Anmeldung: 16.07.2025
(73) Patentinhaber: Accuride International GmbH, 65582 Diez/Lahn (DE)
(72) Erfinder: SATONY, Christian, 56598 Rheinbrohl (DE)
(74) Vertreter: WSL Patentanwälte Partnerschaft mbB

(56) Entgegenhaltungen:
- EP-A1- 2 677 200
- EP-A1- 4 248 799
- EP-B1- 3 919 770

## Beschreibung

Die vorliegende Erfindung betrifft ein lineares Führungssystem mit einem ersten Schienenelement und einem zweiten Schienenelement, wobei das erste Schienenelement und das zweite Schienenelement in und entgegen einer Auszugsrichtung linear gegeneinander verschiebbar aneinander gelagert sind, einem Spindeltrieb, der eine Gewindespindel und eine auf der Gewindespindel laufende Spindelmutter aufweist, wobei die Gewindespindel um eine Spindelachse drehbar an dem ersten Schienenelement gelagert ist oder um die Spindelachse drehbar an einer in oder entgegen der Auszugsrichtung gegenüber dem ersten Schienenelement festgelegten Einrichtung gelagert ist, wobei die Spindelmutter in und entgegen der Auszugsrichtung an dem zweiten Schienenelement festgelegt ist, sodass sich die Spindelmutter bei einer Drehbewegung der Gewindespindel um die Spindelachse an der Gewindespindel entlang bewegt und das zweite Schienenelement mitnimmt.

Lineare Führungssysteme, insbesondere Teleskopschienen, mit mindestens zwei Schienenelementen und gegebenenfalls einem Wälzkörperkäfig mit darin aufgenommenen Wälzkörpern zur Reduzierung der Reibung zwischen den Schienenelementen sind in mannigfaltigen Ausführungsformen aus dem Stand der Technik bekannt. Sie werden in verschiedenen Haushaltsgeräten, aber auch im Automobilbau und in vielen weiteren Anwendungen eingesetzt. In einer Vielzahl von Anwendungsbereichen kommen bereits lineare Führungssysteme zum Einsatz, die motorisch angetrieben sind. Dabei wird häufig ein Spindeltrieb als Linearantrieb verwendet. Ein solcher Spindeltrieb setzt eine Drehbewegung einer Gewindespindel in eine Linearbewegung einer auf der Gewindespindel geführten Spindelmutter um und damit in eine Linearbewegung der Schienenelemente relativ zueinander.

Als problematisch hat sich herausgestellt, dass die Gewindespindeln der Spindeltriebe dazu neigen, um ihre Drehachse zu taumeln oder gegenüber den Schienenelementen zu schwingen. Stößt dabei die Gewindespindel gegen eines der Schienenelemente, so kommt es zu einer Geräuschentwicklung. Zudem verschlechtern Taumeln und Schwingen die Haptik und den Lauf des Führungssystems. Die Gewindespindeln müssen ein hohes Maß an Geradheit aufweisen, um das Taumeln zu vermeiden. Zudem sind die Einflüsse beschriebenen Effekte auf Lauf, Geräuschentwicklung und Haptik drehzahlabhängig. Letzteres begrenzt die

Verfahrgeschwindigkeit des ersten und des zweiten Schienenelements relativ zueinander auf niedrige Geschwindigkeiten. EP 3 919 770 B1 offenbart eine Teleskopschiene mit einer Antriebseinrichtung, wobei die Antriebseinrichtung in einem Betrieb der Teleskopschiene eine lineare Verschiebebewegung des zweiten Schienenelements gegenüber dem ersten Schienenelement in oder entgegen der Auszugsrichtung bewirkt.

Demgegenüber ist es Aufgabe der vorliegenden Erfindung, ein motorisch antreibbares lineares Führungssystem bereitzustellen, welches zumindest einen der zuvor genannten Nachteile reduziert oder vermeidet.

Die zuvor genannte Aufgabe wird durch ein lineares Führungssystem gemäß dem beigefügten unabhängigen Anspruch 1 gelöst. Dazu trägt bei dem linearen Führungssystem der eingangs genannten Art das zweite Schienenelement ein in oder entgegen der Auszugsrichtung gegenüber dem zweiten Schienenelement festgelegtes Spindellager. Dabei ist das Spindellager derart ausgestaltet und angeordnet, dass das Spindellager die Gewindespindel zumindest in einer ersten Auszugsposition des zweiten Schienenelements relativ zu dem ersten Schienenelement gegenüber dem zweiten Schienenelement führt.

Der vorliegenden Erfindung liegt die Idee zugrunde, ein lineares Führungssystem mit einem Spindeltrieb bereitzustellen, bei welchem die Gewindespindel zusätzlich zu einer antriebsseitigen Lagerung in einem Spindellager geführt wird. Dieses Spindellager wird von dem zweiten Schienenelement getragen und ist in oder entgegen der Auszugsrichtung gegenüber dem zweiten Schienenelement festgelegt. Das Spindellager vollzieht daher die Relativbewegung des zweiten Schienenelements gegenüber dem ersten Schienenelement zusammen mit dem zweiten Schienenelement nach.

Die Lagerung der Gewindespindel in dem Spindellager führt zu einem ruhigeren Lauf des linearen Führungssystems. Längere Gewindespindeln sind realisierbar, die Geräuschentwicklung beim Verfahren der ersten und zweiten Schienenelemente relativ zueinander ist reduziert und es können höhere Drehzahlen und damit höhere Verfahrgeschwindigkeiten des ersten und des zweiten Schienenelements relativ zueinander erzielt werden.

Die Lagerung der Gewindespindel in einem mit dem zweiten Schienenelement mitbewegtem Spindellager ist zudem vorteilhaft, da diese Lagerung keine Rücksicht auf die Bewegung der Spindelmutter gegenüber der Gewindespindel nehmen muss. Eine Kollision zwischen Spindelmutter und Spindellager ist ausgeschlossen. Eine Lagerung der Gewindespindel an dem zweiten Schienenelement ermöglicht zudem, dass ein Wälzkörperkäfig zwischen dem ersten und dem zweiten Schienenelement bewegen kann.

Überraschenderweise hat sich gezeigt, dass eine zusätzliche Stützung der Gewindespindel beim Verfahren des ersten und des zweiten Schienenelements relativ zueinander nicht in allen Betriebssituationen zwingend notwendig ist. Daher sind Ausführungsformen denkbar, in denen das Spindellager die Gewindespindel nur an der ersten Auszugsposition bzw. um diese herum stützt, während in einer anderen, zweiten Auszugspositionen des zweiten Schienenelements relativ zu dem ersten Schienenelement das Spindellager außer Eingriff mit der Gewindespindel sein kann, sodass diese dann frei läuft.

Eine Auszugsposition im Sinne der vorliegenden Anmeldung ist eine Relativposition des zweiten Schienenelements gegenüber dem ersten Schienenelement gemessen entlang der Auszugsrichtung.

In einer Ausführungsform der Erfindung weist das Spindellager eine die Gewindespindel aufnehmende Lagerbuchse auf, wobei zumindest in einer ersten Auszugsposition die Gewindespindel bei einer Relativbewegung der Gewindespindel gegenüber dem zweiten Schienenelement in oder entgegen der Auszugsrichtung mit der Lagerbuchse in einem gleitenden Eingriff ist, sodass das Spindellager die Gewindespindel stützt. Die Lagerbuchse bezeichnet denjenigen Oberflächenabschnitt des Spindellagers, der mit der Gewindespindel in Gleiteingriff ist oder in Gleiteingriff bringbar ist.

Die Lagerbuchse des Spindellagers dient einer Stützung bzw. Lagerung der Gewindespindel in radialer Richtung, während die Lagerbuchse in und entgegen der Auszugsrichtung ausschließlich in einem gleitenden Eingriff mit der Gewindespindel ist. Das Spindellager ist keine zweite Gewindemutter, es besteht kein Formschluss zwischen Gewindespindel und Lagerbuchse in oder entgegen der Auszugsrichtung.

Die Auszugsrichtung ist diejenige Richtung, in der das zweite Schienenelement ausgehend von einer von vollständig eingefahrenen Auszugsposition gegenüber dem ersten Schienenelement relativ linear bewegt wird, um in eine vollständig ausgefahrene Auszugsposition zu gelangen. Entsprechend ist eine Richtung entgegen der Auszugsrichtung diejenige Richtung, in welche das zweite Schienenelement gegenüber dem ersten Schienenelemente bewegt wird, um wieder in eine vollständig eingefahrene Auszugsposition zu gelangen.

Eine axiale Richtung und eine radiale Richtung beziehen sich in dieser Anmeldung auf die Drehachse der Gewindespindel. Die Drehachse der Gewindespindel ist in einer Ausführungsform im Wesentlichen parallel zu der Auszugsrichtung.

In einer Ausführungsform der Erfindung weist die Lagerbuchse eine axiale Länge parallel zu der Auszugsrichtung auf, wobei die axiale Länge der Lagerbuchse kleiner ist als ein Verfahrweg der Lagerbuchse relativ zu der Gewindespindel zwischen einer maximal eingefahrenen Auszugsposition des zweiten Schienenelements relativ zu dem ersten Schienenelement und einer maximal ausgefahrenen Auszugsposition des zweiten Schienenelements relativ zu dem ersten Schienenelement. Eine verglichen mit dem maximalen Verfahrweg des zweiten Schienenelements relativ zu dem ersten Schienenelement kurze axiale Länge der Lagerbuchse führt zu einem ruhigen Lauf der Gewindespindel bei vertretbaren Kräften aufgrund der Gleitreibung der Lagerbuchse gegenüber der Gewindespindel sowie einer reduzierten Verkantung zwischen der Gewindespindel und der Lagerbuchse.

In einer Ausführungsform der Erfindung weist die Lagerbuchse eine axiale Länge von 40 mm oder weniger, vorzugsweise von 30 mm oder weniger und besonders bevorzugt von 25 mm oder weniger auf.

Dem steht gegenüber, dass eine Ausführungsform der Lagerbuchse, bei der die Lagerbuchse in der Auszugsrichtung möglichst lang ist, einen Schmierstoff zum Schmieren der Gewindespindel gegenüber der Gewindemutter besser hält.

In einer Ausführungsform der Erfindung weist das Spindellager im Bereich der Lagerbuchse eine oder mehrere Schmiertaschen zur Aufnahme eines Schmierstoffs auf.

In einer Ausführungsform der Erfindung ist die Lagerbuchse derart an dem zweiten Schienenelement angeordnet, dass in der maximal ausgefahrenen Auszugsposition des zweiten Schienenelements relativ zu dem ersten Schienenelement die Lagerbuchse außer Eingriff mit der Gewindespindel ist. Es hat sich gezeigt, dass eine solche Ausführungsform die Gewindespindel während der Verfahrbewegung des ersten und des zweiten Schienenelements relativ zueinander in optimierte Weise stützt. Über einen Großteil des Verfahrwegs hinweg ist die Lagerbuchse ideal positioniert, während das Außereingriffkommen der Lagerbuchse und der Gewindespindel in der maximal ausgefahrenen Auszugsposition keine negativen Auswirkungen mit sich bringt.

In einer weiteren Ausführungsform der Erfindung weist die Lagerbuchse in einer Richtung parallel zu der Auszugsrichtung einen Abstand von 100 mm oder weniger, vorzugsweise von 90 mm oder weniger und besonders bevorzugt von 80 mm oder weniger von der Spindelmutter auf. Der Abstand zwischen der Lagerbuchse und der Spindelmutter ist für die Erzielung eines ruhigeren Laufs der Gewindespindel ein wesentlicher Parameter. Ein größerer Abstand führt zu einer stärkeren Vibration der Anordnung.

In einer Ausführungsform der Erfindung ist die Lagerbuchse des Spindellagers derart an dem zweiten Schienenelement angeordnet, dass in jeder Auszugsposition des zweiten Schienenelements relativ zu dem ersten Schienenelement ein freies Ende der Gewindespindel höchstens 100 mm, vorzugsweise höchstens 90 mm und besonders bevorzugt höchstens 80 mm von der Lagerbuchse, in der die Gewindespindel aufgenommen ist, beabstandet ist. Dieser maximale Überstand des freien Endes der Gewindespindel gegenüber der Lagerbuchse wird als maximale freie (ungestützte) Gewindespindellänge bezeichnet.

Das freie Ende der Gewindespindel ist dasjenige Ende der Gewindespindel, das dem an den Motor oder eine Kupplung gekoppelten Ende der Gewindespindel gegenüberliegt.

In einer Ausführungsform der Erfindung ist die Lagerbuchse derart an dem zweiten Schienenelement angeordnet, dass in der maximal ausgefahrenen Auszugsposition des zweiten Schienenelements gegenüber dem ersten Schienenelement die Lagerbuchse in etwa dort angeordnet ist, wo das erste Schienenelement in der Auszugsrichtung endet.

In einer Ausführungsform der Erfindung weist das lineare Führungssystem ein von dem Spindellager, dieses wird dann als erstes Spindellager bezeichnet, in der Auszugsrichtung beabstandetes zweites Spindellager mit einer zweiten Lagerbuchse auf.

Dies hat sich insbesondere dann als zweckmäßig herausgestellt, wenn zumindest die Länge des ersten und/oder zweiten Schienenelements 450 mm oder mehr beträgt oder die freie ungestützte Spindellänge in der vollständig eingefahrenen Auszugsposition 80 mm oder mehr, 90 mm oder mehr oder 100 mm oder mehr betragen würde.

In einer Ausführungsform weist die zweite Lagerbuchse des zweiten Spindellagers von der ersten Lagerbuchse des ersten Spindellagers einen Abstand von höchstens 100 mm, vorzugsweise von höchstens 90 mm und besonders bevorzugt von höchstens 80 mm auf.

In einer Ausführungsform der Erfindung ist die zweite Lagerbuchse eines solchen zweiten Spindellagers in etwa auf der Hälfte der Länge des zweiten Schienenelements angeordnet.

Es sind auch Ausführungsformen mit mehr als zwei Spindellagern möglich.

Anstelle eines zweiten Spindellagers ist es auch möglich, das einzige Spindellager so auszugestalten, dass es eine lange Lagerbuchse aufweist. In einer Ausführungsform der Erfindung ist die Lagerbuchse des Spindellagers um einen Wert in einem Bereich von 100 mm bis 130 mm kürzer als die Gesamtlänge des ersten Schienenelements in der Auszugsrichtung. Die Verkürzung der Lagebuchse gegenüber der Gesamtlänge des ersten Schienenelements trägt dem in das erste Schienenelement hineinragenden Motoradapter sowie der Länge der Spindelmutter und ggf. der Umlenkungseinheit für den Riementrieb zum Synchronisieren eines dritten Schienenelements Rechnung.

Eine lange Lagerbuchse ist in einer Ausführungsform dadurch realisiert, dass das Spindellager integral mit dem zweiten Schienenelement ausgeformt ist. In einer Ausführungsform der Erfindung ist das zweite Schienenelement als ein Extrusionsprofil aus Kunststoff oder Metall, vorzugsweise Aluminium, ausgeführt, sodass alle Elemente des Schienenelements und des Spindellagers von dem Extrusionsprofil abgebildet sind.

In einer Ausführungsform der Erfindung weist das Spindellager einen Einlaufbereich auf, wobei sich der Einlaufbereich entgegen der Auszugsrichtung an die Lagerbuchse anschließt und sich ausgehend von einem Durchmesser der Lagerbuchse entgegen der Auszugsrichtung aufweitet, wobei in einem Betrieb des Systems das freie Ende der Gewindespindel durch den Einlaufbereich in die Lagerbuchse hinein bewegbar ist. In einer Ausführungsform der Erfindung ist eine Innenoberfläche des Einlaufsbereichs kegelstumpfförmig ausgestaltet, wobei der kleinere Durchmesser des Kegelstumpfes gleich dem Durchmesser der Lagerbuchse ist.

In einer Ausführungsform der Erfindung ist das Spindellager symmetrisch ausgestaltet, sodass sich auf der von dem Einlaufbereich abgewandten Seite der Lagerbuchse in der Auszugsrichtung eine identische Formgebung wie die Lagerbuchse anschließt. Auf diese Weise ist die Montage des Spindellagers neutral gegenüber Fehlorientierungen.

In einer Ausführungsform der Erfindung sind das Spindellager und das zweite Schienenelement zweiteilig ausgestaltet. In einer Ausführungsform der Erfindung umfasst das Spindellager ein Teil aus Kunststoff, vorzugsweise ein Spritzgußteil, das an dem zweiten Schienenelement montiert ist. In einer Ausführungsform der Erfindung weist das Teil des Spindellagers aus Kunststoff Polyoxymethylen (POM) auf.

In einer Ausführungsform umfasst das Spindellager ein Gehäuse aus Kunststoff, z.B. aus POM. In einer solchen Ausführungsform umfasst die Lagerbuchse insbesondere ein Material mit einer verglichen mit dem Gehäuse geringeren Gleitreibung gegenüber der Gewindespindel. In einer Ausführungsform besteht die Lagerbuchse aus einem Metall, insbesondere aus einem Messing-Blei-Sinterwerkstoff. Die so ausgestaltete Lagerbuchse ist in einer Ausführungsform in das Gehäuse eingepresst oder die Lagerbuchse ist im Spritzgießverfahren mit dem Kunststoff des Gehäuses umspritzt.

In einer Ausführungsform der Erfindung weist zumindest das erste oder das zweite Schienenelement einen Schienenrücken und zwei Laufflächen für Wälzkörper tragende, sich gegenüber dem Schienenrücken abgewinkelt erstreckende Schenkel auf. Eine Richtung parallel zu den Schienenrücken der ersten und zweiten Schienenelemente wird auch als Hochrichtung bezeichnet.

In einer Ausführungsform wird dabei das Spindellager von einen Lagerbock mit der die Gewindespindel aufnehmenden Lagerbuchse und einem Montageabschnitt gebildet. Der Montageabschnitt dient der Verbindung des Spindellagers mit dem zweiten Schienenelement. In einer Ausführungsform ist der Montageabschnitt zumindest kraftschlüssig zwischen den beiden Schenkeln des zweiten Schienenelements eingeklemmt. Eine solche Ausgestaltung des Spindellagers als Lagerbock mit der Lagerbuchse und einem Montageabschnitt, der sich in das Profil des zweiten Schienenelements einklemmen lässt, ist an die Form eines solchen zweiten Schienenelements angepasst.

In einer Ausführungsform der Erfindung wird der Montageabschnitt in eine Durchbrechung in dem Schienenrücken des zweiten Schienenelements zumindest form- oder kraftschlüssig eingeclipst.

In einer Ausführungsform der Erfindung weist der Montageabschnitt einen Vorsprung oder eine Vertiefung auf, wobei der Schienenrücken des zweiten Schienenelements eine dazu komplementäre Vertiefung oder einen dazu komplementären Vorsprung aufweist. Der Vorsprung greift in die Vertiefung, sodass der Lagerbock in und entgegen der Auszugsrichtung formschlüssig an dem zweiten Schienenelement festgelegt ist. Während das Einklemmen des Montageabschnitts zwischen den Schenkeln einen Formschluss für eine Bewegung des Lagerbocks in der Hochrichtung senkrecht zur Auszugsrichtung bereitstellt, bewirkt die Klemmung in Auszugsrichtung lediglich einen Kraftschluss. Die Kombination aus einem Vorsprung und einer komplementären Vertiefung hingegen stellt auch einen Formschluss zwischen dem Lagerbock und dem zweiten Schienenelement in der Auszugsrichtung bereit.

In einer Ausführungsform der Erfindung sind die Schenkel des zweiten Schienenelements und der Montageabschnitt des Lagerbocks derart ausgestaltet, dass die Schenkel den Lagerbock gegen den Schienenrücken des zweiten Schienenelements drücken. Auf diese Weise ist der Lagerbock auch in einer Richtung senkrecht zu der Auszugsrichtung und senkrecht zu der Hochrichtung formschlüssig an dem zweiten Schienenelement gesichert.

Der Bauraum zwischen den Schienenrücken des ersten Schienenelements und des zweiten Schienenelements ist in den meisten Ausführungsformen begrenzt. In einer Ausführungsform, bei welcher Wälzkörper zwischen den Laufflächen des ersten und des zweiten Schienenelements in einem Wälzkörperkäfig geführt sind, muss zwischen dem Spindellager und dem Schienenrücken des ersten Schienenelements auch der Wälzkörperkäfig ungehindert passieren können.

Eine Möglichkeit, dem Bauraum Rechnung zu tragen, ist die offene Ausgestaltung der Lagerbuchse. Daher ist in einer Ausführungsform der Erfindung die Lagerbuchse abschnittsweise offen. In einer solchen offenen Ausgestaltung ist die Lagerbuchse nicht vollständig zylindrisch, sondern die zylindrische Innenwandfläche der Lagerbuchse umschließt einen Winkel von weniger als 360 Grad. In einer Ausführungsform der Erfindung ist die Lagerbuchse in einem Bereich hin zu dem Schienenrücken des ersten Schienenelements offen.

In einer Ausführungsform der Erfindung umgreift die abschnittsweise offene Lagerbuchse die Gewindespindel um mehr als 180 Grad und weniger als 360 Grad, um dennoch eine angemessene Lagerung in radialer Richtung der Gewindespindel zu erzielen.

Es versteht sich, dass erfindungsgemäß die Spindelmutter gegenüber dem zweiten Schienenelement drehfest an diesem festgelegt ist, d.h. die Spindelmutter dreht sich nicht mit der Gewindespindel mit.

In einer Ausführungsform der Erfindung ist die Spindelmutter in zumindest einer Richtung senkrecht zu der Auszugsrichtung schwimmend an dem zweiten Schienenelement aufgenommen. Die derart schwimmend gelagerte Spindelmutter dient dem Ausgleich von Fertigungstoleranzen. Sie verhindert zudem, dass die Spindelmutter auf der Gewindespindel verklemmt, wenn die Gewindespindel schwingt oder aufgrund einer Unwucht taumelt. Allerdings weist eine derart schwimmend gelagerte Spindelmutter auch keinerlei Lagerfunktion für die Gewindespindel in einer radialen Richtung der Gewindespindel auf. In einer Ausführungsform der Erfindung ist die Spindelmutter in der Hochrichtung sowie in einer zu der Hochrichtung und der Auszugsrichtung senkrechten Richtung (diese ist auch senkrecht zu den Schienenrücken des ersten und des zweiten Schienenelements) schwimmend gelagert. Es versteht sich, dass auch in einer solchen Ausführungsform die Spindelmutter in und entgegen der Auszugsrichtung an dem zweiten Schienenelement festgelegt ist, um ihre Antriebsfunktion für die Ausfahr- und Einfahrbewegung der beiden Schienenelemente relativ zueinander zu erfüllen.

In einer weiteren Ausführungsform der vorliegenden Erfindung weist das lineare Führungssystem einen Elektromotor auf. Ein solcher Elektromotor ist gegenüber dem ersten Schienenelement in und entgegen der Auszugsrichtung festgelegt. Dabei ist die Gewindespindel derart wirksam mit dem Elektromotor gekoppelt, dass der Elektromotor in dem Betrieb des linearen Führungssystems die Gewindespindel in eine Drehbewegung versetzt.

Ein Elektromotor im Sinne der vorliegenden Erfindung ist ein Motor mit einer sich drehenden Motorwelle zum Bereitstellen eines Drehmoments. In einer Ausführungsform der Erfindung ist der Elektromotor ausgewählt aus einer Gruppe bestehend aus einem Schrittmotor, einem bürstenlosen Gleichstrommotor (BLDC) oder einem bürstenbehafteten Gleichstrommotor (DC).

In einer Ausführungsform der Erfindung ist die Gewindespindel an dem ersten Schienenelement ausschließlich an dem Elektromotor gelagert.

In einer Ausführungsform der Erfindung wird das Spindellager als letztes Bauelement beim Zusammenbau des linearen Führungssystems montiert. In einer Ausführungsform der Erfindung erfolgt eine solche Montage durch eine Ausnehmung im Schienenrücken des zweiten Schienenelements und das Spindellager wird vorzugsweise in das Loch eingeclipst.

In einer Ausführungsform der Erfindung ist das lineare Führungssystem ausgewählt aus einer Gruppe bestehend aus einer Auszugsführung, einer Teleskopschiene und einer Linearführung. Dabei umfasst der Oberbegriff lineares Führungssystem Gleitführungen und Wälzkörperführungen. Der Begriff "lineares Führungssystem" ist breit zu verstehen, dass nicht nur Konstruktionen davon umfasst sind, bei welchen das erste Schienenelement und das zweite Schienenelement in etwa die gleiche Länge aufweisen, d.h. insbesondere Teleskopschienen, sondern auch Linearführungen, bei denen eines der Schienenelemente, insbesondere das zweite Schienenelement, deutlich kürzer ist als das andere Schienenelement.

In einer Ausführungsform der Erfindung ist das erste Schienenelement das stationäre Schienenelement.

Gemäß der vorliegenden Erfindung weist das lineare Führungssystem ein erstes Schienenelement und ein zweites Schienenelement auf. Dies schließt aber nicht aus, dass das lineare Führungssystem, insbesondere wenn es sich um eine Auszugs- oder Teleskopschiene handelt, weitere Schienenelemente, insbesondere ein zusätzliches drittes Schienenelement, beispielsweise zum Bereitstellen eines Vollauszugs, umfasst.

In einer Ausführungsform der Erfindung weist das lineare Führungssystem ein erstes Schienenelement, ein zweites Schienenelement und ein drittes Schienenelement auf. In einer solchen Ausführungsform weist hat das zweite Schienenelement vier Laufflächen. Dabei wälzen zwischen den zwei Laufflächen des ersten Schienenelements und zwei der vier Laufflächen des zweiten Schienenelements Wälzkörper und zwischen den anderen zwei der vier Laufflächen des zweiten Schienenelements und den zwei Laufflächen des dritten Schienenelements wälzen ebenfalls Wälzkörper.

In einer Ausführungsform der Erfindung weisen das erste und das zweite Schienenelement jeweils zwei Laufflächen auf, wobei auf den zwei Laufflächen des ersten Schienenelements und auf den zwei Laufflächen des zweiten Schienenelements in einem Wälzkörperkäfig aufgenommene Wälzkörper angeordnet sind. Diese Wälzkörper rollen auf den jeweiligen Laufflächen ab und verringern eine Reibung zwischen dem ersten Schienenelement und dem zweiten Schienenelement. Unter einem Wälzkörper im Sinne der vorliegenden Anmeldung wird ein Rotationskörper verstanden, der als Element einer Führung die Reibung zwischen den verschiedenen Schienenelementen erheblich reduziert und damit eine Relativbewegung zweier Schienenelemente zueinander erleichtert. Wälzkörper sind beispielsweise Lagerkugeln, Rollen, Tonnen, Nadeln oder Kegel. In einer Ausführungsform der vorliegenden Erfindung sind die Wälzkörper Lagerkugeln. Es versteht sich, dass in diesem Fall der Wälzkörperkäfig ein Kugelkäfig ist.

In einer Ausführung der Erfindung ist zumindest das erste Schienenelement oder das zweite Schienenelement aus einem Material gefertigt, dass ausgewählt ist aus einer Gruppe bestehend aus Stahlblech, aluminiertem Stahlblech und Edelstahl.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit identischen Bezugszeichen bezeichnet.
- Figur 1: ist eine isometrische, teilweise transparente Ansicht einer erfindungsgemäßen Teleskopschiene von schräg oben im vollständig eingefahrenen Zustand.
- Figur 2: ist eine isometrische, teilweise transparente Ansicht der Teleskopschiene aus Figur 1 im vollständig ausgefahrenen Zustand.
- Figur 3: ist eine Schnittansicht durch die Teleskopschiene aus den Figuren 1 und 2 entlang der Linie A-A aus Figur 1.
- Figur 4: ist eine isometrische Ansicht einer Ausführungsform eines Spindellagers für die Teleskopschiene aus den Figuren 1 bis 3.
- Figur 5: ist eine Draufsicht von unten auf das Spindellager aus Figur 4.
- Figur 6: ist eine Ansicht von vorne auf das Spindellager aus Figuren 3 und 4.
- Figur 7: ist eine Schnittansicht durch das Spindellager aus Figuren 3 bis 6 entlang der Linie B-B aus Figur 6.

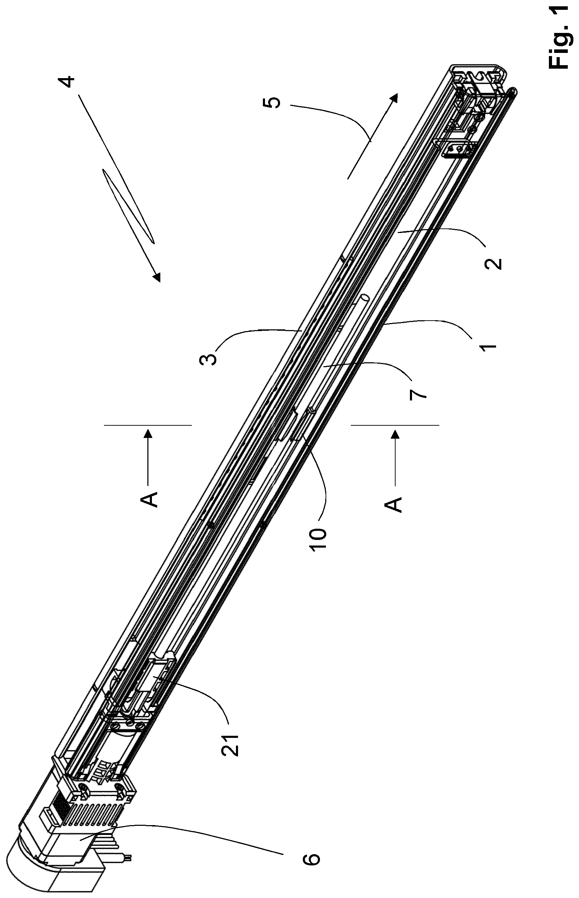

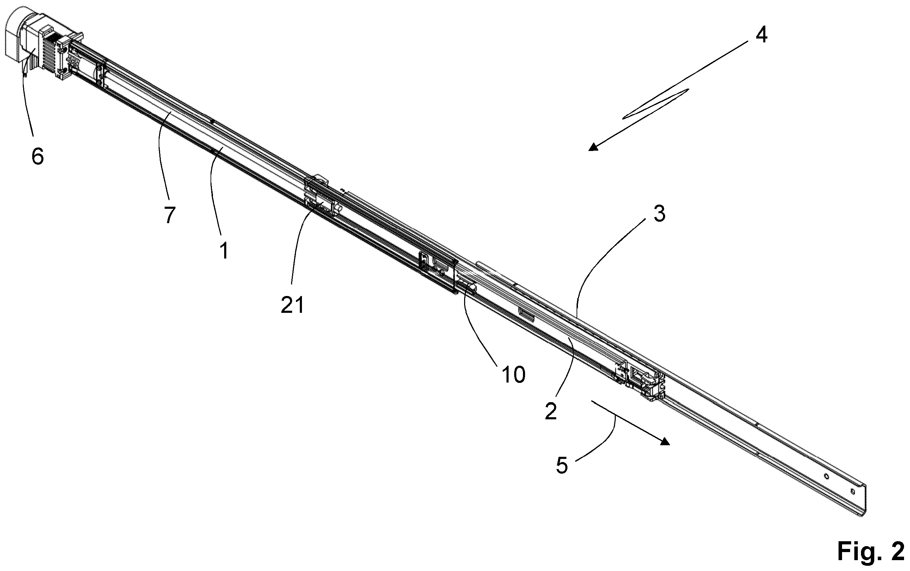

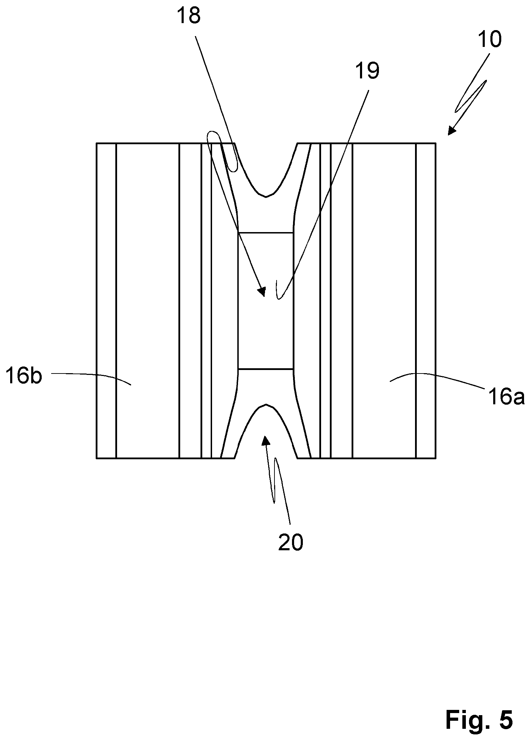

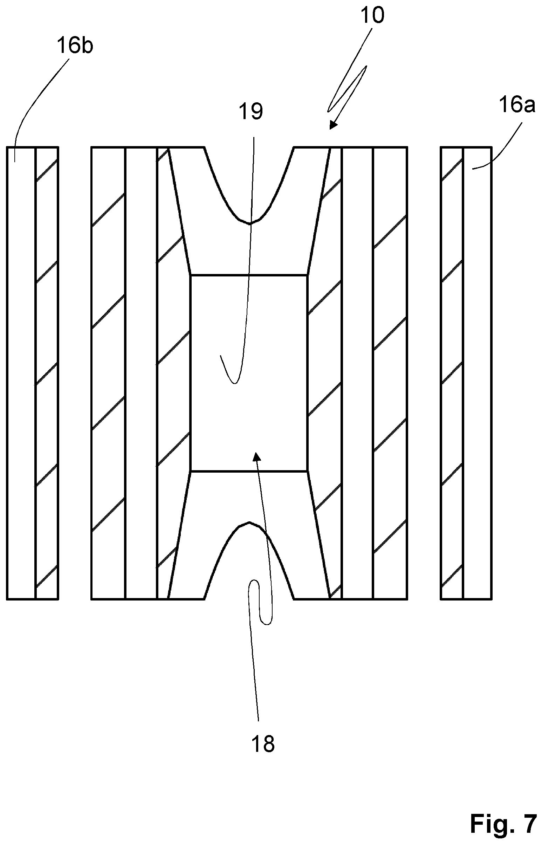

Die Figuren 1 bis 7 illustrieren eine Variante eines erfindungsgemäßen linearen Führungssystems in Form eines Teleskopauszugs 4. Bei dem Teleskopauszug 4 handelt es sich um einen Vollauszug mit einem ersten Schienenelement 1, einem zweiten Schienenelement 2 und einem dritten Schienenelement 3. Dabei zeigt Figur 1 den Teleskopauszug 4 in seinem vollständig eingefahrenen Zustand, während Figur 2 eine Darstellung des vollständig ausgefahrenen Zustands zeigt, in welchem das dritte Schienenelement 3 in der Auszugsrichtung 5 keinen Überlapp mit dem ersten Schienenelement 1 mehr hat.

Dabei bildet das zweite Schienenelement 2 eine Mittelschiene, die sowohl an dem ersten stationären Schienenelement 1 und gegenüber diesem in und entgegen der Auszugsrichtung beweglich gelagert ist als auch an dem dritten Schienenelement 3 in und entgegen der Auszugsrichtung beweglich gelagert ist.

Das erste Schienenelement 1 und das dritte Schienenelement 3 weisen jeweils ein C-förmiges Profil auf. Ein Schienenrücken 11 verbindet jeweils zwei Schenkel 12a, 12b. Die Schenkel 12a, 12b bilden aufeinander hin zeigende Laufflächen 13. Auf den Laufflächen 13 wälzen Wälzkörper in Form von Lagerkugeln 14. Diese Lagerkugeln 14 wälzen gleichzeitig auf Laufflächen 15 des zweiten Schienenelements 2. Das zweite Schienenelement 2 besteht aus zwei C-förmigen Profilen, die an ihren Rücken 15 miteinander verbunden sind.

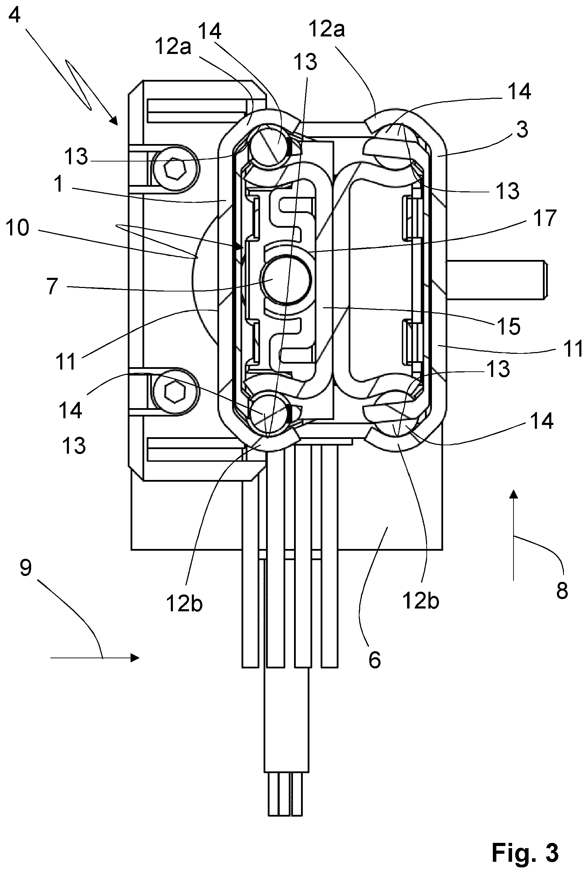

Der Teleskopauszug 4 ist mittels eines Elektromotors 6 motorisch angetrieben, sodass eine Verfahrbewegung des zweitens Schienenelements 2 gegenüber dem ersten Schienenelement 1 und des dritten Schienenelements 3 gegenüber dem zweiten Schienenelement 2 automatisiert erfolgt. Der Elektromotor 6 treibt eine Drehbewegung einer an den Elektromotor 6 bzw. dessen Motorwelle gekoppelten Gewindespindel 7. Die Gewindespindel 7 ist gut in der Querschnittsansicht aus Figur 3 zu erkennen.

Eine Spindelmutter (in den Figuren nicht gezeigt) ist drehfest gegenüber dem zweiten Schienenelement 2 an diesem festgelegt. Zudem ist die Spindelmutter in und entgegen der Auszugsrichtung 5 an dem zweiten Schienenelement 2 festgelegt. Daher führt eine Drehbewegung der Gewindespindel 7 zu einer Linearbewegung der Spindelmutter und damit des zweiten Schienenelements 2 gegenüber dem ersten Schienenelement 1. Die gleichzeitige, synchrone Ausfahrbewegung des dritten Schienenelements 3 gegenüber dem zweiten Schienenelement 2 wird durch eine Synchronisierung über einen Riementrieb, so wie er in dem europäischen Patent EP 3 919 770 B1 im Detail beschrieben ist, erreicht.

An dem stationären ersten Schienenelement 1 ist die Gewindespindel 7 nur über den Elektromotor 6 gelagert.

Während die Spindelmutter 21 verdrehsicher gegenüber dem zweiten Schienenelement und in und entgegen der Auszugsrichtung an dem zweiten Schienenelement 2 festgelegt ist, ist die Spindelmutter 21 in zwei zueinander und zu der Auszugsrichtung 5 senkrechten Richtungen, nämlich der Hochrichtung 8 und der dazu senkrechten Richtung 9, schwimmend an dem zweiten Schienenelement 2 gelagert.

Dieses Spiel der Gewindemutter gegenüber dem zweiten Schienenelement 2 in den Richtungen 8 und 9 führt ohne das erfindungsgemäße Spindellager 10 dazu, dass die Gewindespindel 7 nahezu ungehindert gegenüber dem zweiten Schienenelement 2 taumeln und/oder schlagen kann. Eine solche Taumel- oder Vibrationsbewegung der Gewindespindel 7 führt aber gegebenenfalls zu einer Geräuschentwicklung, wenn die Gewindespindel 7 an das zweite Schienenelement 2 oder das erste Schienenelement 1 anschlägt und zu Vibrationen, die sich auch auf die mit dem Teleskopauszug 4 verbundenen Elemente übertragen können. Daher ist erfindungsgemäß an dem zweiten Schienenelement 2 das Spindellager 10 vorgesehen.

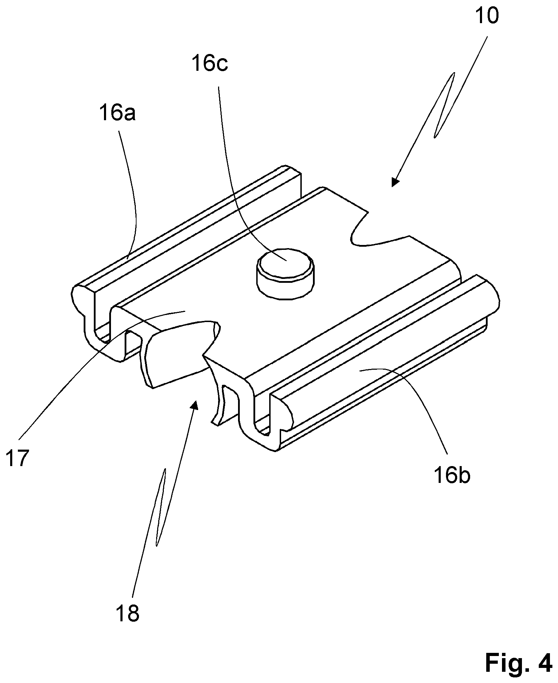

Der Aufbau und die Funktion des Spindellagers 10 wird nun anhand der vergrößerten Darstellungen des Spindellagers 10 aus den Figuren 4 bis 7 beschrieben. Das Spindellager 10 ist an der in Figur 1 mit der Linie A-A bezeichneten Position des zweiten Schienenelements 2 an diesem zweiten Schienenelement 2 befestigt. Auf diese Weise bewegt sich das Spindellager 10 bei einer Ausfahrbewegung des zweiten Schienenelements 2 gegenüber dem ersten Schienenelement 1 so lange an der Gewindespindel entlang, bis die Gewindespindel aus dem Spindellager herausrutscht. Auf diese Weise erfährt die Gewindespindel 7 eine optimale Lagerung bzw. Stützung über einen Großteil des Verfahrwegs hinweg. Dass die Gewindespindel 7 kurz vor Erreichen der maximalen ausgefahrenen Auszugsposition (siehe Figur 2) aus dem Spindellager herausrutscht, beeinträchtigt überraschenderweise das Laufverhalten des Teleskopauszugs 4 nicht.

Bei dem Spindellager 10 handelt es sich um einen durch Spritzgießen aus POM hergestellten Lagerbock 17, der einstückig ausgestaltet ist und bei der Systemintegration an dem zweiten Schienenelement 2 montiert wird. Der Lagerbock 17 besteht aus einem zweiteiligen Montageabschnitt 16a, 16b sowie einer Lagerbuchse 18. Der Montageabschnitt 16a, 16b klemmt den Lagerbock 17 zwischen den die Laufflächen 15 des zweiten Schienenelements 2 tragenden Schenkeln 12a, 12b. Aufgrund des C-förmigen Profils des zweiten Schienenelements 2 ist der Montageabschnitt 16a, 16b des Lagerbocks 17 so an dem zweiten Schienenelement 2 geklemmt, dass der Lagerbock 17 zum Schienenrücken 15 des zweiten Schienenelements 2 hin gedrückt wird. Die beiden Teile des Montageabschnitts 16a, 16b führen zu einer formschlüssigen Verbindung zwischen dem Lagerbock 17 und dem zweiten Schienenelement 2 in der Hochrichtung 8. Demgegenüber bewirkt der Montageabschnitt 16a, 16b in der Auszugsrichtung 5 lediglich einen Kraftschluss aufgrund der Haftreibung zwischen der Oberfläche des Montageabschnitts 16a, 16b und den Schenkeln 12a, 12b des zweiten Schienenelements 2. Um zusätzlich noch einen Formschluss zwischen dem Lagerbock 17 und dem zweiten Schienenelement 2 in und entgegen der Auszugsrichtung 5 bereitzustellen, weist der Montageabschnitt noch einen Vorsprung 16c auf, der in den Schienenrücken 15 des zweiten Schienenelements 2 formschlüssig eingreift und zuverlässig alle Kräfte aufnimmt, die in und entgegen der Auszugsrichtung 5 in den Lagerbock 17 eingeleitet werden.

Damit der an dem zweiten Schienenelement 2 montierte Lagerbock 17 seine Lagerfunktion erfüllen kann, weist er eine Lagerbuchse 18 auf. Bei der Lagerbuchse 18 handelt es sich um einen zylindrischen Innenwandabschnitt 19 des Lagerbocks 17. Der Radius des Innenwandabschnitts 19 ist so dimensioniert, dass die Gewindespindel 7 eine Gleitbewegung gegenüber der Innenwand 19 ausführen und trotzdem die Gewindespindel 7 in radialer Richtung eine Lagerung bzw. Stützung erfährt. Der Lagerbock 17 weist ferner einen Einlaufbereich 20 auf, wobei sich in dem Einlaufbereich 20 der Innenwandabschnitt kegelstumpfförmig ausgehend vom nominellen Radius der Innenwandfläche 19 der Lagerbuchse 18 nach außen, d.h. entgegen der Auszugsrichtung 5, aufweitet. Auf diese Weise kann das vordere, freie Ende der Gewindespindel 7 nach dem Verlassen der Lagerbuchse 18 wieder in diese hineinlaufen, wenn das zweite Schienenelement 2 entgegen der Auszugsrichtung 5 eingefahren wird.

In der gezeigten Ausführungsform ist der Lagerbock 17 symmetrisch aufgebaut, d.h. auch auf der dem Einlaufbereich 20 abgewandten Seite der Lagerbuchse 18 weitet diese sich auf. Die Symmetrie dient lediglich dazu, bei der Montage nicht auf die Orientierung des Lagerbocks 17 achten zu müssen.

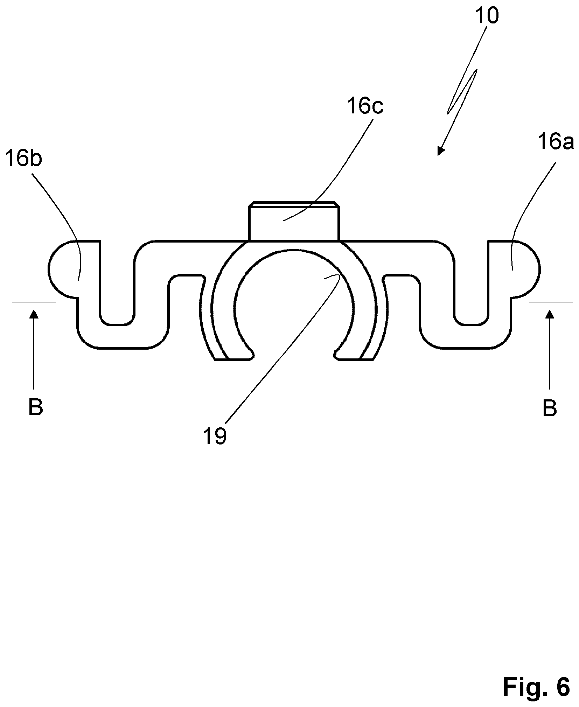

Die zylindrische Innenwandfläche 19 ist zum Schienenrücken des ersten Schienenelements 1 hin offen. Mit anderen Worten ausgedrückt bildet die Fläche 19 keinen vollständigen Zylinder. Die Fläche 19 umschließt aber die Gewindespindel 7 um etwa 270°. Gut ist dies insbesondere in der Schnittansicht aus Figur 6 zu erkennen. Das Öffnen der Lagerbuchse 18 hin zu dem Schienenrücken 11 des ersten Schienenelements 1 reduziert die Baugröße der Lagerung für die Gewindespindel 7. Dies ist erforderlich, da in dem Zwischenraum zwischen dem Schienenrücken des zweiten Schienenelements 2 und dem Schienenrücken des ersten Schienenelements 1 auch der Kugelkäfig, welcher die Lagerkugeln 14 führt, laufen muss.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die beschriebenen Ausführungsformen beschränkt.

### Bezugszeichenliste

- 1: erstes Schienenelement
- 2: zweites Schienenelement
- 3: drittes Schienenelement
- 4: Teleskopauszug
- 5: Auszugsrichtung
- 6: Elektromotor
- 7: Gewindespindel
- 8: Hochrichtung
- 9: Richtung senkrecht zur Hochrichtung und zur Auszugsrichtung
- 10: Spindellager
- 11: Schienenrücken
- 12a, 12b: Schenkel
- 13: Lauffläche
- 14: Lagerkugel
- 15: Schienenrücken
- 16a, 16b: Montageabschnitt
- 16c: Vorsprung
- 17: Lagerbock
- 18: Lagerbuchse
- 19: Innenwandabschnitt
- 20: Einlaufbereich
- 21: Spindelmutter

## Patentansprüche

1. Lineares Führungssystem (4) mit
einem ersten Schienenelement (1) und einem zweiten Schienenelement (1), wobei das erste Schienenelement (1) und das zweite Schienenelement (2) in und entgegen einer Auszugsrichtung (5) linear gegeneinander verschiebbar aneinander gelagert sind,
einem Spindeltrieb, der eine Gewindespindel (7) und eine auf der Gewindespindel (7) laufende Spindelmutter (21) aufweist,
wobei die Gewindespindel (7) um eine Spindelachse drehbar an dem ersten Schienenelement (1) gelagert ist oder um die Spindelachse drehbar an einer in oder entgegen der Auszugsrichtung (5) gegenüber dem ersten Schienenelement (1) festgelegten Einrichtung (6) gelagert ist, und
wobei die Spindelmutter (21) in und entgegen der Auszugsrichtung (5) an dem zweiten Schienenelement (2) festgelegt ist, sodass sich die
Spindelmutter (21) bei einer Drehbewegung der Gewindespindel (7) um die Spindelachse an der Gewindespindel (7) entlang bewegt und das zweite Schienenelement (2) mitnimmt,
**dadurch gekennzeichnet, dass**
das zweite Schienenelement (2) ein in oder entgegen der Auszugsrichtung (5) gegenüber dem zweiten Schienenelement (2) festgelegtes Spindellager (10) trägt,
wobei das Spindellager (10) derart ausgestaltet und angeordnet ist, dass das Spindellager (10) die Gewindespindel (7) zumindest in einer ersten Auszugsposition des zweiten Schienenelements (2) relativ zu dem ersten Schienenelement (1) gegenüber dem zweiten Schienenelement (2) führt.

2. Lineares Führungssystem (4) nach dem vorhergehenden Anspruch, wobei das Spindellager (10) eine die Gewindespindel (7) aufnehmende Lagerbuchse (18) aufweist, wobei zumindest in der ersten Auszugsposition die Gewindespindel (7) bei einer Relativbewegung der Gewindespindel (7) gegenüber dem zweiten Schienenelement (2) in
oder entgegen der Auszugsrichtung mit der Lagerbuchse (18) in einem gleitenden Eingriff ist, so dass das Spindellager (10) die Gewindespindel (7) stützt.

3. Lineares Führungssystem (4) nach dem vorhergehenden Anspruch, wobei die Lagerbuchse (18) eine axiale Länge (I) parallel zu der Auszugsrichtung aufweist, wobei die axiale Länge der Lagerbuchse kleiner ist als ein Verfahrweg der Lagerbuchse (18) relativ zu der Gewindespindel (7) zwischen einer maximal eingefahrenen Auszugsposition des zweiten Schienenelements (2) relativ zu dem ersten Schienenelement (1) und einer maximal ausgefahrenen Auszugsposition des zweiten Schienenelements (2) relativ zu dem ersten Schienenelement (1).

4. Lineares Führungssystem (4) nach dem vorhergehenden Anspruch, wobei die Lager-
buchse (18) derart an dem zweiten Schienenelement (2) angeordnet ist, dass in der
maximal ausgefahrenen Auszugsposition des zweiten Schienenelements (2) relativ zu dem ersten Schienenelement (1) die Lagerbuchse (18) außer Eingriff mit der Gewindespindel (7) ist.

5. Lineares Führungssystem (4) nach dem vorhergehenden Anspruch, wobei die Lagerbuchse (18) in einer Richtung parallel zu der Auszugsrichtung (5) einen Abstand (d) von 50 mm oder weniger von der Spindelmutter (21) aufweist.

6. Lineares Führungssystem (4) nach einem der Ansprüche 2 bis 5, wobei das Spindellager (10) einen Einlaufbereich (20) aufweist, wobei sich der Einlaufbereich (20) entgegen der Auszugsrichtung (5) an die Lagerbuchse (18) anschließt und sich ausgehend von einem Durchmesser der Lagerbuchse (18) entgegen der Auszugsrichtung (5) aufweitet, wobei in einem Betrieb des Führungssystems (4) ein freies Ende der Gewindespindel (7) durch den Einlaufbereich (20) in die Lagerbuchse (18) hineinbewegbar ist.

7. Lineares Führungssystem (4) nach einem der vorhergehenden Ansprüche,
wobei das zweite Schienenelement (2) einen Schienenrücken (11) und zwei Laufflächen (13) für Wälzkörper (14) tragende, sich gegenüber dem Schienenrücken (11) abgewinkelt erstreckende Schenkel (12a, 12b) aufweist,
wobei das Spindellager (10) von einem Lagerbock (17) mit der die Gewindespindel (7) aufnehmenden Lagerbuchse (18) und einem Montageabschnitt (16a, 16b) gebildet ist und
wobei der Montageabschnitt (16a, 16b) zumindest kraftschlüssig zwischen den beiden Schenkeln (12a, 12b) eingeklemmt ist.

8. Lineares Führungssystem (4) nach dem vorhergehenden Anspruch, wobei der Montageabschnitt einen Vorsprung (16c) oder Vertiefung aufweist, wobei der Schienenrücken (15) des zweiten Schienenelements (2) eine dazu komplementäre Vertiefung oder einen dazu komplementären Vorsprung aufweist, so dass der Lagerbock (17) in und entgegen der Auszugsrichtung (5) formschlüssig an dem zweiten Schienenelement (2) festgelegt ist.

9. Lineares Führungssystem (4) nach Anspruch 7 oder 8, wobei die Schenkel (12a, 12b) des zweiten Schienenelements (2) und der Montageabschnitt (16a, 16b) des Lagerbocks (17) derart ausgestaltet ist, dass die Schenkel (12a, 12b) den Lagerbock (17) gegen den Schienenrücken (11) drücken.

10. Lineares Führungssystem (4) nach einem der Ansprüche 2 bis 9, wobei die Lagerbuchse (18) zu dem ersten Schienenelement (1) hin abschnittsweise offen ist.

11. Lineares Führungssystem (4) nach einem der vorhergehenden Ansprüche, wobei die Spindelmutter (21) in zumindest einer Richtung senkrecht zu der Auszugsrichtung (5) schwimmend an dem zweiten Schienenelement (2) aufgenommen ist.

12. Lineares Führungssystem (4) nach einem der vorhergehenden Ansprüche,
wobei das lineare Führungssystem (4) einen Elektromotor (6) aufweist,
wobei die Gewindespindel (7) derart wirksam mit dem Elektromotor (6) gekoppelt ist, dass der Elektromotor (6) in dem Betrieb des linearen Führungssystems (4) die Gewindespindel (7) in eine Drehbewegung versetzt.

13. Lineares Führungssystem (4) nach dem vorhergehenden Anspruch, wobei die Gewindespindel (7) an dem ersten Schienenelement (1) ausschließlich über den Elektromotor (6) gelagert ist.

## Claims

1. A linear guide system (4) comprising
a first rail element (1) and a second rail element (2), wherein the first rail element (1) and the second rail element (2) are mounted so as to be linearly displaceable relative to one another in and against a pull-out direction (5),
a lead screw drive comprising a threaded lead screw (7) and a lead screw nut (21) running on the threaded lead screw (7),
wherein the threaded lead screw (7) is mounted rotatably about a lead screw axis on the first rail element (1) or is mounted rotatably about the lead screw axis on a device (6) fixed in or against the pull-out direction (5) relative to the first rail element (1), and
wherein the lead screw nut (21) is fixed to the second rail element (2) in and against the pull-out direction (5), so that the lead screw nut (21) moves along the threaded lead screw (7) during a rotary motion of the threaded lead screw (7) about the lead screw axis and entrains the second rail element (2),
**characterised in that**
the second rail element (2) carries a lead screw bearing (10) fixed in or against the pull-out direction (5) relative to the second rail element (2),
wherein the lead screw bearing (10) is arranged and positioned such that the lead screw bearing (10) guides the threaded lead screw (7) at least in a first pull-out position of the second rail element (2) relative to the first rail element (1) with respect to the second rail element (2).

2. The linear guide system (4) according to the previous claim, wherein the lead screw bearing (10) comprises a bearing bush (18) receiving the threaded lead screw (7), wherein at least in the first pull-out position the threaded lead screw (7) is in a sliding engagement with the bearing bush (18) during a relative motion of the threaded lead screw (7) with respect to the second rail element (2) in or against the pull-out direction, so that the lead screw bearing (10) supports the threaded lead screw (7).

3. The linear guide system (4) according to the previous claim, wherein the bearing bush (18) comprises an axial length (l) parallel to the pull-out direction, wherein the axial length of the bearing bush is smaller than a travel distance of the bearing bush (18) relative to the threaded lead screw (7) between a maximum retracted pull-out position of the second rail element (2) relative to the first rail element (1) and a maximum extended pull-out position of the second rail element (2) relative to the first rail element (1).

4. The linear guide system (4) according to the previous claim, wherein the bearing bush (18) is positioned on the second rail element (2) in such a way that in the maximum extended pull-out position of the second rail element (2) relative to the first rail element (1), the bearing bush (18) is out of engagement with the threaded lead screw (7).

5. The linear guide system (4) according to the previous claim, wherein the bearing bush (18) comprises a distance (d) of 50 mm or less from the lead screw nut (21) in a direction parallel to the pull-out direction (5).

6. The linear guide system (4) according to any one of claims 2 to 5, wherein the lead screw bearing (10) comprises a lead-in area (20), wherein the lead-in area (20) adjoins the bearing bush (18) against the pull-out direction (5) and widens starting from a diameter of the bearing bush (18) against the pull-out direction (5), wherein, during operation of the guide system (4), a free end of the threaded lead screw (7) can be moved through the lead-in area (20) into the bearing bush (18).

7. The linear guide system (4) according to any one of the previous claims,
wherein the second rail element (2) comprises a rail back (11) and two running surfaces (13) for rolling elements (14) carrying legs (12a, 12b) extending at an angle relative to the rail back (11),
wherein the lead screw bearing (10) is formed by a bearing block (17) with the bearing bush (18) receiving the threaded lead screw (7) and a mounting section (16a, 16b), and
wherein the mounting section (16a, 16b) is clamped between the two legs (12a, 12b) at least in a force-fit manner.

8. The linear guide system (4) according to the previous claim, wherein the mounting section comprises a projection (16c) or recess, wherein the rail back (15) of the second rail element (2) comprises a recess complementary thereto or a projection complementary thereto, so that the bearing block (17) is positively fixed to the second rail element (2) in and against the pull-out direction (5).

9. The linear guide system (4) according to claim 7 or 8, wherein the legs (12a, 12b) of the second rail element (2) and the mounting section (16a, 16b) of the bearing block (17) are arranged in such a way that the legs (12a, 12b) press the bearing block (17) against the rail back (11).

10. The linear guide system (4) according to any one of claims 2 to 9, wherein the bearing bush (18) is open in sections towards the first rail element (1).

11. The linear guide system (4) according to any one of the previous claims, wherein the lead screw nut (21) is floatingly received on the second rail element (2) in at least one direction perpendicular to the pull-out direction (5).

12. The linear guide system (4) according to any one of the previous claims,
wherein the linear guide system (4) comprises an electric motor (6),
wherein the threaded lead screw (7) is operatively coupled to the electric motor (6) such that the electric motor (6) sets the threaded lead screw (7) into a rotational motion during operation of the linear guide system (4).

13. The linear guide system (4) according to the previous claim, wherein the threaded lead screw (7) is mounted on the first rail element (1) exclusively via the electric motor (6).

## Revendications

1. Système de guidage linéaire (4) avec
un premier élément de rail (1) et un deuxième élément de rail (1), dans lequel le premier élément de rail (1) et le deuxième élément de rail (2) sont montés l'un sur l'autre de manière à pouvoir coulisser linéairement l'un par rapport à l'autre dans une direction d'extraction (5) et dans le sens opposé à celle-ci,
un entraînement à broche, qui présente une broche filetée (7) et un écrou de broche (21) circulant sur la broche filetée (7),
dans lequel la broche filetée (7) est montée sur le premier élément de rail (1) de manière à pouvoir tourner autour d'un axe de broche ou est montée de manière à pouvoir tourner autour de l'axe de broche sur un dispositif (6) fixé par rapport au premier élément de rail (1) dans la direction d'extraction (5) ou dans le sens opposé à celle-ci, et
dans lequel l'écrou de broche (21) est fixé sur le deuxième élément de rail (2) dans la direction d'extraction (5) et dans le sens opposé à celle-ci si bien que l'écrou de broche (21) se déplace le long de la broche filetée (7) lors d'un mouvement de rotation de la broche filetée (7) autour de l'axe de broche et entraîne le deuxième élément de rail (2),
**caractérisé en ce que**
le deuxième élément de rail (2) porte un palier de broche (10) fixé par rapport au deuxième élément de rail (2) dans la direction d'extraction (5) ou dans le sens opposé à celle-ci,
dans lequel le palier de broche (10) est configuré et disposé de telle manière que le palier de broche (10) guide la broche filetée (7) par rapport au deuxième élément de rail (2) au moins dans une première position d'extraction du deuxième élément de rail (2) par rapport au premier élément de rail (1).

2. Système de guidage linéaire (4) selon la revendication précédente, dans lequel le palier de broche (10) présente un coussinet (18) recevant la broche filetée (7), dans lequel au moins dans la première position d'extraction, la broche filetée (7) est en prise par glissement avec le coussinet (18) lors d'un mouvement relatif de la broche filetée (7) par rapport au deuxième élément de rail (2) dans la direction d'extraction ou dans le sens opposé à celle-ci de telle sorte que le palier de broche (10) soutient la broche filetée (7).

3. Système de guidage linéaire (4) selon la revendication précédente, dans lequel le coussinet (18) présente une longueur axiale (1) parallèlement à la direction d'extraction, dans lequel la longueur axiale du coussinet est inférieure à une course de déplacement du coussinet (18) par rapport à la broche filetée (7) entre une position d'extraction maximale rentrée du deuxième élément de rail (2) par rapport au premier élément de rail (1) et une position d'extraction maximale sortie du deuxième élément de rail (2) par rapport au premier élément de rail (1).

4. Système de guidage linéaire (4) selon la revendication précédente, dans lequel le coussinet (18) est disposé sur le deuxième élément de rail (2) de telle manière que dans la position d'extraction maximale sortie du deuxième élément de rail (2) par rapport au premier élément de rail (1), le coussinet (18) est hors prise avec la broche filetée (7).

5. Système de guidage linéaire (4) selon la revendication précédente, dans lequel le coussinet (18) présente un écart (d) inférieur ou égal à 50 mm par rapport à l'écrou de broche (21) dans une direction parallèle à la direction d'extraction (5).

6. Système de guidage linéaire (4) selon l'une des revendications 2 à 5, dans lequel le palier de broche (10) présente une zone d'entrée (20), dans lequel la zone d'entrée (20) se raccorde au coussinet (18) dans le sens opposé à la direction d'extraction (5) et s'élargit dans le sens opposé à la direction d'extraction (5) en partant d'un diamètre du coussinet (18), dans lequel une extrémité libre de la broche filetée (7) peut être déplacée dans le coussinet (18) à travers la zone d'entrée (20) lors d'un fonctionnement du système de guidage (4).

7. Système de guidage linéaire (4) selon l'une des revendications précédentes,
dans lequel le deuxième élément de rail (2) présente un dos de rail (11) et deux branches (12a, 12b) portant des surfaces de roulement (13) pour des corps de roulement (14) et s'étendant de manière coudée par rapport au dos de rail (11),
dans lequel le palier de broche (10) est formé par un support de palier (17) avec le coussinet (18) recevant la broche filetée (7) et une section de montage (16a, 16b) et
dans lequel la section de montage (16a, 16b) est coincée au moins par liaison de force entre les deux branches (12a, 12b).

8. Système de guidage linéaire (4) selon la revendication précédente, dans lequel la section de montage présente une partie faisant saillie (16c) ou un renfoncement, dans lequel le dos de rail (15) du deuxième élément de rail (2) présente un renfoncement complémentaire à celle-ci ou une partie faisant saillie complémentaire à celui-ci, de telle sorte que le support de palier (17) est fixé par complémentarité de forme sur le deuxième élément de rail (2) dans la direction d'extraction (5) et dans le sens opposé à celle-ci.

9. Système de guidage linéaire (4) selon la revendication 7 ou 8, dans lequel les branches (12a, 12b) du deuxième élément de rail (2) et la section de montage (16a, 16b) du support de palier (17) sont configurées de telle manière que les branches (12a, 12b) appuient le support de palier (17) contre le dos de rail (11).

10. Système de guidage linéaire (4) selon l'une des revendications 2 à 9, dans lequel le coussinet (18) est ouvert par sections vers le premier élément de rail (1).

11. Système de guidage linéaire (4) selon l'une des revendications précédentes, dans lequel l'écrou de broche (21) est reçu de manière flottante sur le deuxième élément de rail (2) dans au moins une direction perpendiculairement à la direction d'extraction (5).

12. Système de guidage linéaire (4) selon l'une des revendications précédentes,
dans lequel le système de guidage linéaire (4) comporte un moteur électrique (6),
dans lequel la broche filetée (7) est couplée de manière efficace au moteur électrique (6) de telle manière que le moteur électrique (6) déplace la broche filetée (7) dans un mouvement de rotation lors du fonctionnement du système de guidage linéaire (4).

13. Système de guidage linéaire (4) selon la revendication précédente, dans lequel la broche filetée (7) est montée sur le premier élément de rail (1) exclusivement par l'intermédiaire du moteur électrique (6).
